# EUROPEAN PATENT APPLICATION

(11) **EP 4 102 801 A1**
(43) Date of publication of application: **14.12.2022**
(21) Application number: 21275077.2
(22) Date of filing: 09.06.2021
(51) Int. Cl.: H04L 29/08, G01S 13/88, H04L 29/06

(54) **CORRELATION OF DATA LINK MESSAGES IN A TACTICAL LINK DATA NETWORK**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

In some examples, an apparatus for correlating data link messages received at a platform from multiple sources in a tactical data link network comprises a data link interface to receive a first message from a first source in the tactical data link network, the first message comprising first data defining one or more parameters of an object detected by the first source, and a correlator to compare the first message with sensor data representing the output of a sensor of the platform, the sensor data comprising second data defining one or more parameters of an object detected by the platform, on the basis of the comparison, generate a unique correlator identifier representing a detected object, and provide the unique correlator identifier to the first source.

## Description

### FIELD

The present invention relates, in general, to data link messaging in tactical environments.

### BACKGROUND

In military operations, especially during combat conditions, the rapid exchange of accurate tactical information can be critical to the outcome. The North Atlantic Treaty Organization (NATO) developed tactical data link (TDL) standards that are being implemented by all major NATO members and various other nations.

TDLs are standardized radio communications that are used by militaries and other organizations for maintaining a common situational or operational picture among participants in a local or common operational area. TDL systems can exchange data link messages characterized by standard message and transmission formats. Although these formats are designed to promote interoperability in a limited bandwidth environment, various TDL standards have evolved over the years in the form of Standardized NATO Agreements (STANAGs), such as Link 11, Link 16 and Link 22 for example, which can make interoperability between systems problematic and inefficient, leading to possible data loss or duplication. Furthermore, in order to minimise bandwidth usage, legacy systems can select information from certain sources in favour of information derived other sources.

### SUMMARY

According to a first aspect, there is provided an apparatus for correlating data link messages received at a platform from multiple sources in a tactical data link network, the apparatus comprising a data link interface to receive a first message from a first source in the tactical data link network, the first message comprising first data defining one or more parameters or characteristics of an object detected by the first source, and a correlator to compare the first message with sensor data representing the output of a sensor of the platform, the sensor data comprising second data defining one or more parameters of an object detected by the platform, on the basis of the comparison, generate a unique correlator identifier representing a detected object, and provide the unique correlator identifier to the first source. The apparatus can determine a set of common parameters or characteristics from the first data and the second data. The apparatus can provide the set of common parameters to the first source, and receive data from the first source representing a confirmation of whether the object detected by the first source is the same as the object detected by the platform. The apparatus can generate third data defining one or more parameters or characteristics of the detected object, the third data derived from the first data and the second data. The apparatus can provide the unique correlator identifier to a remote platform.

According to a second aspect, there is provided a method for correlating data link messages received at a platform from multiple sources in a tactical data link network, the method comprising receiving a first message from a first source in the tactical data link network at a data link interface of the platform, the first message comprising first data defining one or more parameters of an object detected by the first source, comparing the first message with sensor data representing the output of a sensor of the platform, the sensor data comprising second data defining one or more parameters of an object detected by the platform, on the basis of the comparison, generating a unique correlator identifier representing a detected object, and providing the unique correlator identifier to the first source. The method can further comprise generating third data defining one or more parameters of the detected object, the third data derived from the first data and the second data. The method can further comprise identifying the third data using the unique correlator identifier. The method can further comprise storing data representing an uncorrelated detected object in a common track storage apparatus. The method can further comprise determining a set of common parameters from the first data and the second data.

According to a third aspect, there is provided a platform, comprising a data link interface to receive a first message from a first source in a tactical data link network, the first message comprising first data defining one or more parameters of an object detected by the first source, and a correlator to compare the first message with sensor data representing the output of a sensor of the platform, the sensor data comprising second data defining one or more parameters of an object detected by the platform, on the basis of the comparison, generate a unique correlator identifier representing a detected object, and provide the unique correlator identifier to the first source. The platform can generate third data defining one or more parameters of the detected object, the third data derived from the first data and the second data. The platform can further comprise a common track storage apparatus to store data representing an uncorrelated detected object. The correlator can receive a correlation request from the first source. The data link interface and correlator can be part of an apparatus for the platform, which apparatus forms a node of the tactical data link network.

### BRIEF DESCRIPTION OF THE FIGURES

Embodiments of the invention will now be described, by way of example only, with reference to the figures, in which:
Figure 1 is a schematic representation of a tactical environment according to an example;
Figure 2 is a schematic representation of an apparatus according to an example;
Figure 3 is a schematic representation of a correlator according to an example;
Figure 4 is a schematic representation of a system according to an example; and
Figure 5 is a schematic representation of a node or apparatus of a platform according to an example.

### DETAILED DESCRIPTION

Example embodiments are described below in sufficient detail to enable those of ordinary skill in the art to embody and implement the systems and processes herein described. It is important to understand that embodiments can be provided in many alternate forms and should not be construed as limited to the examples set forth herein. Accordingly, while embodiments can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof.

Tactical Data Links (TDLs) are secure military communication standards that exchange tactical data between platforms and commanders. As noted above, there are various different TDL standards in use which are employed to exchange data relating to a prevailing tactical environment. Typically, data exchanged via TDLs relates to the identification of other platforms operating within the environment, including potentially hostile objects or entities, and the subsequent tracking of the movement of these identified objects or entities. Accordingly, an identified object is commonly assigned a track or track number, which provides an identification (ID) enabling movements and other parameters, aspects or characteristics of the object to be assigned to the correct track and monitored. When new data representing, e.g., the position of a given object is received over a TDL, the object is identified so that the new data can be mapped to a track. The track representing the object can then be updated, thereby providing a near real time view of its movements and characteristics.

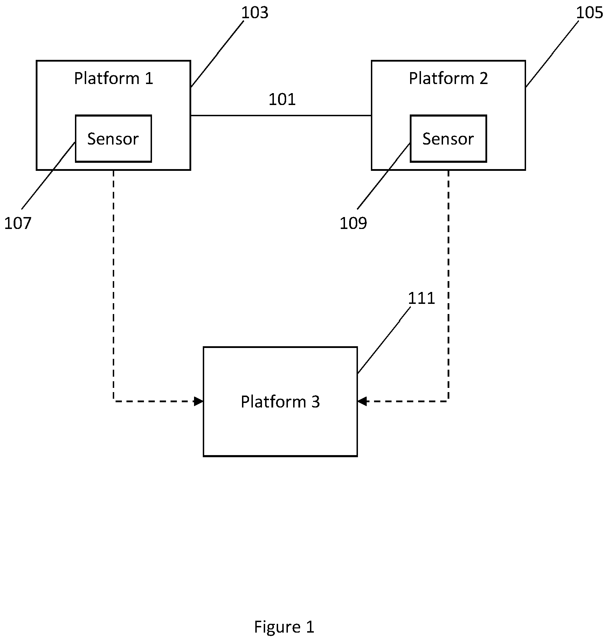

Figure 1 is a schematic representation of a tactical environment according to an example. In the example of figure 1, two airborne platforms operating in concert (i.e., jointly, and with a shared or aligned aim) have a shared situational awareness and operational picture resulting from the exchange of tactical data over a TDL 101. For example, platform 103 and platform 105 can comprise respective local sensors 107, 109 that can be used to generate data representing a third object or platform 111, which in the case of figure 1 is a ground-based vehicle. The data relating to the platform 111 can be shared over TDL 101. As information about the platform 111 is gathered, the situational picture of other platforms can be updated in order to provide a real-time (or near real-time) view of the prevailing tactical environment.

Generally speaking, tactical environments are more complex than that described with reference to figure 1 and can comprise a relatively larger number of platforms interacting to exchange tactical data about detected objects and entities over various TDL standards that has been captured by a plethora of sensors. When multiple platforms operate in concert the naming of tracks relating to detected objects takes on more significance as objects/tracks may be referenced by multiple operators and mission commanders in order to enable cooperative action to be taken. Problems can arise where multiple platforms transmit their local sensor information about a track over, e.g., Link 16 without realising they are all reporting the same physical entity but with different IDs.

Historically, due to large numbers of platforms sharing information, legacy systems were bandwidth constrained, which led to a mechanism to throttle the amount of information being passed around. For example, legacy networks such as Link 16 for example can communicate two sets of information about a track: a basic track reporting message and a demand driven continuation or amplification message. The Track Reporting Message contains a minimum of basic information about an object in question, such as an identifier for the object, the object's position, heading, measure of hostility etc., and is transmitted repeatedly. The continuation message on the other hand is transmitted on request. It contains more (or different) information on the object in question (depending on the sensor capability of the reporting platform). That is, a track continuation message can provide more detailed information about a detected object that has been generated using one or more local sensors of a platform. It can therefore use a larger proportion of the available bandwidth in a tactical data link network over and above the reporting of the basic information.

In order to avoid duplication, where two platforms identify they are reporting the same entity they can agree, based upon a set of predetermined data link rules, which platform has the best track quality. The platform with the lower quality stops reporting the track information associated with the object in question over the Link 16 network in favour of the platform with the higher quality. The quality of a track reported by a platform can be characterised by, e.g., the level of granularity to which movements of a tracked platform are resolved, i.e., by the positional accuracy of the reported track information from a platform. For example, a platform able to resolve a change in position of an object detected using a local sensor resulting from a movement of the object greater than 1m can be defined as providing a higher quality track than a platform able to resolve a change in position detected using a local sensor resulting from a movement of the object of no less than 10m. The platform reporting with the lower quality then displays the link track (correlated with its own track) on its Tactical Picture using the Track ID from the 'higher quality' reporting unit. This then allows operators on both platforms to refer to the track using a common reference, thereby avoiding confusion.

However, this approach loses information from the other platforms which are no longer reporting the information they have on the correlated entity. A significant impact of this approach is the loss of the continuation message from the non-reporting platforms, especially where the platform sensors differ from those of the selected "reporting" platform. For example, continuation messages from platforms with sensors with differing capabilities or sensing properties could be used to provide data to enrich the overall tactical picture were those continuation messages still available. Accordingly, lower quality (in the sense of a prevailing data link rule used to select track data reporting) track information is no longer available to the network providing the operational picture. This can be an issue depending on the type of sensor used by the platforms in question. For example, the platform using a sensor with a higher positional accuracy may not have all (or the same set) of information as the platform using a sensor with a lower positional quality which may be able to provide continuation message data that would be valuable. That is, despite a higher resolution in terms of geographical location and movement, some potentially valuable data relating to a tracked entity may be lost when information from the 'lower quality' reporting is discarded.

According to an example, an apparatus is provided that is suitable for correlating data link messages received at a platform from multiple sources in a tactical data link network. This enables, at a broad level, information about a detected entity to be augmented or enriched with information from multiple sources such as local sensors of a platform and/or data from other platforms that have also detected the same entity.

As such, information that may otherwise have been lost due to selection of information according to a quality metric, such as in the form of continuation messages for example, can be used to amplify existing data, thereby potentially providing an additional layer of intelligence that can be used to aid decision making in a tactical environment. Correlation of information from multiple sources enables a single track to be used for an entity rather than multiple instances of the same track that has been reported by different platforms.

The additional information generated by multiple track reports of the same entity has little impact on the overall bandwidth whereas the ability to provide on-demand continuation messages significantly enhances the ability for data fusion and off platform correlation techniques to enhance operational awareness. Thus, reporting of a single track by multiple platforms in order to enhance overall situational awareness is enabled. In an example, individual track messages are lightweight (in terms of data size) and have little to no impact on overall bandwidth whilst continuation messages, transmitted on request, are beneficial as described above. According to an example, each reporting platform can identify their reports as referring to a single correlated entity and can mark them with a common correlated identifier that is unique to a detected object.

During the reporting responsibility negotiations between platforms in which platforms determine which is providing the higher quality track reporting message information, the "lower quality" reporting platform can identify its track as the same as the higher quality reporting platform and mark it accordingly using a unique correlation identifier representing the detected object. The lower quality reporting platform can then continue to report the track (including track amplification messages for example) over the tactical data link network thereby enabling nodes to see the both the higher quality and the lower quality reports (which are lower quality in terms of positional fidelity for example, but which can be rich in other tactically valuable data on an object). In an example, the information from both messages can be aggregated or fused together to form a more complete picture of the reported track. Practically speaking, the aggregation of data can comprise enrichment of, e.g., track data displayed to an operator on a TDL system to include information about an object that would otherwise not be available or only be available on request.

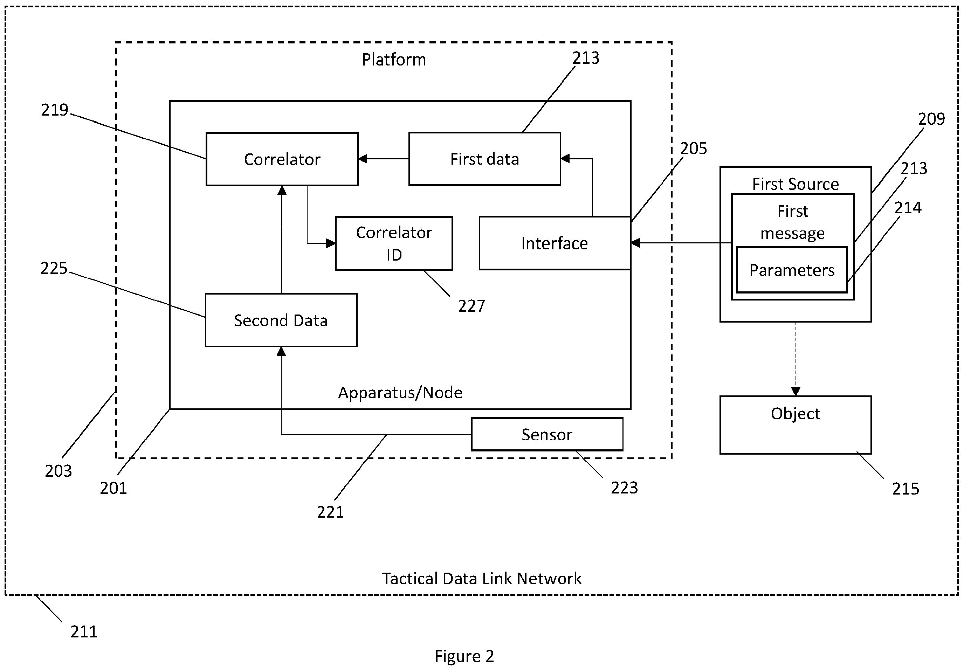

Figure 2 is a schematic representation of an apparatus according to an example. Apparatus 201 can be a node in a platform 203 such as a vehicular platform (e.g., an aircraft, water-based vessel, land-based vehicle) or a node in a command centre, which may be mobile or static. That is, a node may be classed as an on-platform node or an off-platform node. On-Platform nodes can be located on an operator or physical operational platform (land, air or maritime). The platform can provide its own location and tactical information using, e.g., one or more local sensors 223, such as radar, imaging device, acoustic sensor and the like for example. An off-Platform node can form part of a mission control and management infrastructure. Off-platform nodes can have access to a TDL network in order to enable it to send and receive TDL messages for example. In an example, an off-platform node can support multiple operator access over web browser and the use of 3rd party software analysis tools.

According to an example, apparatus 201 comprises a data link interface 205. The data link interface 205 is configured to receive data, such as a first message 213, from a first source 209 in a tactical data link network 211. The first message 213 can comprise first data 213 defining one or more parameters or characteristics 214 of an object 215 detected by the first source 209. For example, the apparatus 201 can receive sensor data from another platform in the tactical data link network 211, which may have used a local sensor to generate information about the object 215.

The apparatus 201 further comprises a correlator 219. Correlator 219 is configured to compare the first message 213 with sensor data 221 representing the output of a sensor 223 of the platform 203. In an example, the sensor data 221 can comprise second data 225 defining one or more characteristics of an object detected by the platform 203. The sensor data 221 (and therefore the second data 225) can comprise information about the object 215 that is otherwise not part of the first message 213. For example, the second data 225 can comprise additional information about object 215 that can be used to enrich the intelligence available as part of a track reporting message for example.

On the basis of the comparison, the apparatus 201 can generate a unique correlator identifier 227 representing a detected object. The unique correlator identifier 227 can be used locally by platform 203, and/or by platform 209 (i.e., platform 203 can provide the unique correlator identifier 227 to the first source 209). That is, the correlator 219 can use second data 225 such as data 221 from sensors 223 of the platform 203 as well as data 213 from another source 209 such as another aircraft etc., which forms the first message 213. The apparatus 201, by way of correlator 219, compares the content of these data and on the basis of that comparison generates an ID for a detected object which can be provided to the other source 209. Accordingly, the apparatus can utilise local data and compare it to data from a remote source to determine if an object detected by both is the same. A unique identifier can be assigned to the object that has been detected in the event that it is the same, thereby enabling a common track to be provided for the object that can be used by the platforms 203, 209. In an example, second data can be received at interface 205 from another remote platform, rather than from local sensors 223.According to an example, by providing a common track identifier derived from (or comprising) a correlator ID for a detected object, data representing the object can be enriched using data, such as TDL messages and information that would otherwise be discarded, as described above. That is, considering the example of figure 2, the data 213 from the first source 209 may comprise position data for a detected object 215 that may be discarded in preference to position data from a local sensor 223 of the platform 203. Data 213 may also comprise, e.g., information about a detected object 215 that is not detected by the local sensor 223 of the platform 203. For example, data 213 may comprise imagery and/or information relating to a payload of the detected.

According to an example, the additional information (relating to, e.g., a payload) can be used to augment the data 221 generated by the sensor 223 of the platform 203. That is, information that would otherwise be lost can therefore be added to a track for an object which has been identified as a commonly detected object (i.e., detection in common by one or more platforms). It is therefore possible to ingest track information from multiple sources and to correlate information in order to avoid display clutter. That is, once correlated, a single track can be displayed rather than multiple instances of the same track reported by different nodes. Furthermore, information from the multiple sources can be fused to create a superset of the available information regarding the correlated entity.

In the example of figure 2, in order to determine whether object 215 is the same as the object detected by platform 203 using, e.g., local sensor 223, platform 203 may initiate a correlation check. That is, either of its own volition and triggered by, e.g., receipt of data 213, or by way of instigation by a remote platform such as platform 209 for example, platform 203 can determine whether the object detected by platform 203 is the same as the object 215 detected by platform 209 and use the results of the check to generate the correlator ID 227 in the event that the objects are determined to be the same. In an example, the position of the detected objects may be compared to determine whether the objects are the same. For example, if the position reported by the platforms 203, 209 is the same, to within a predetermined degree of tolerance such as 1-10m for example, the objects can be considered to be the same. Other parameters or characteristics of an object can be used either together with or in isolation from an object's position for the purposes of determining whether it correlates with an object detected by another platform.

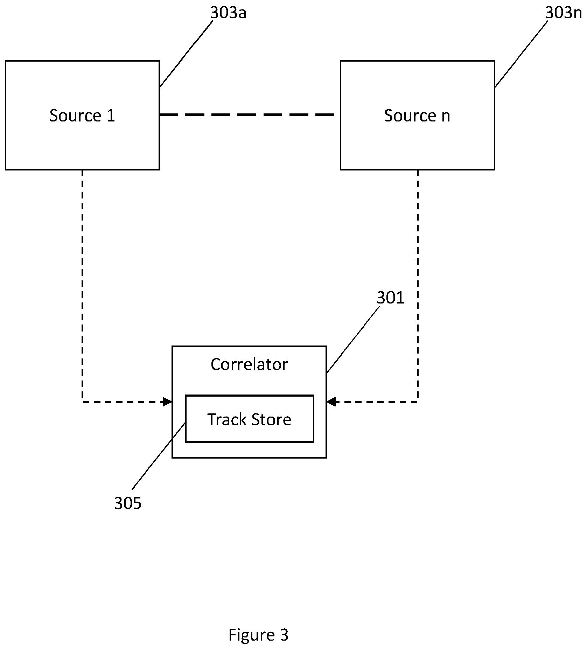

Figure 3 is a schematic representation of a correlator according to an example. Correlator 301 can receive (i.e., ingest) data from multiple sources 303a-n. In an example, a source 303a-n can comprise one of a local sensor configured to provide local platform sensor data (such as sensor data 221 representing the output of a sensor 223 of the platform 203), a TDL, and data from a shared tactical environment picture. A common track store 305 may be provided as part of the correlator 301 or provided as separate a storage apparatus that may be part of an apparatus such as apparatus 201, or separate therefrom. The common track store 305 is used to store data representing tracks for detected objects and is accessible by correlator 301.

In the example of figure 3, correlator 301 receives data from one or more local sources, such as, e.g., radar. This data is used to create one or more tracks relating to a detected object or objects. This enables the platform in question to monitor the detected object(s) and use the locally created tracks to update their position. Correlator 301 can also receive data in the form of TDL messages from, e.g., remote platforms that may be operating in concert. Information from TDL sources can be combined with local track information for an object to provide enhanced track information about the object. Correlator 301 can also receive data, such as TDL messages relating to a common operational picture, which provides operational information that is shared by more than one Command (where a Command is generally a unit or units, an organization, or an area under the command of one individual). Accordingly, correlator 301 can receive data representing a local operational picture from local sensors. That is, a local operational picture can be generated using platform mounted/dismounted sensors that determine, e.g., the geographical position and signatures of objects within range of the sensors. Multiple local operational pictures can be shared and fused into a common operational picture (in which case the local operational picture is, in general, replaced by the common operational picture).

Accordingly, correlator 301 can correlate local sensor information and local TDL information to create a Local platform correlated view of the prevailing tactical picture. In the event that the platform loses connectivity with a command this picture can take the form of a common track store picture used by the platform. In an example, track entities, representing detected objects, are given a platform unique identifier where they are detected locally but are not correlated with a TDL track. Where the local and data link sources correlate the Data Link ID is used as the local Track Store Identifier and the system fuses the information from both sources into a higher fidelity version of the track in the Local Track Store. For example, local sensor data can be augmented with information from a local and/or common TDL messages.

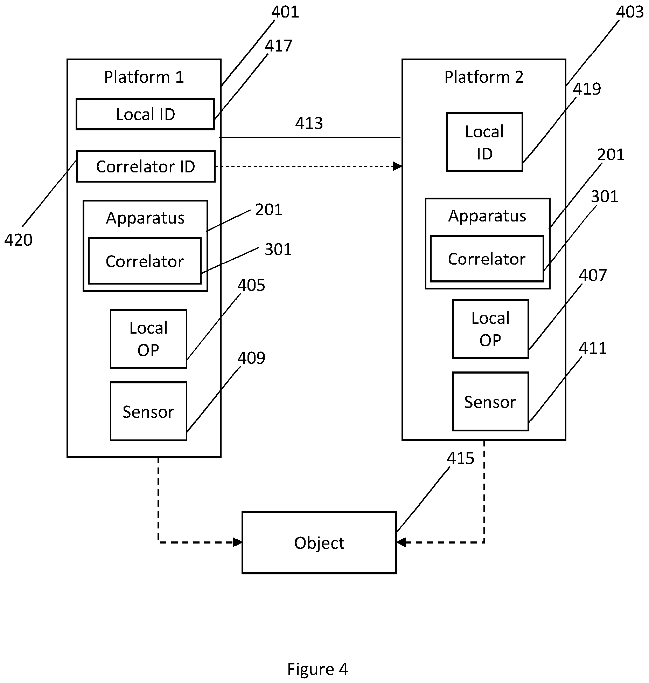

Figure 4 is a schematic representation of a system according to an example. Figure 4 comprises two platforms 401, 403 operating in concert. Each platform 401, 403 can generate its own local operational picture 405, 407 representing information generated using, e.g., local sensors 409, 411 of the platforms. Each platform 401, 403 can share tactical data with the other over a TDL network 413. Accordingly, platforms 401, 403 may share a local operational picture. In the example of figure 4, an object 415 is detected by platforms 401, 403. As noted above with reference to figure 3, each platform assigns the detected object a local identifier 417, 419.

In order to form a shared tactical environment, in which all entities are sharing their information and are able to communicate to each other using common referencing, platforms 401, 403 need to be able to refer to the object being identified 415 using the same reference (and where that entity is being passed over legacy Data link Networks using the legacy network identifier). Furthermore, in an example, such a reference should be automatically allocated to other network participants, and it should not result on one or the other participants ceasing to report what they know about the track (i.e., the object 415) to avoid loss of data.

According to an example, correlator 301, which may be provided as part of an apparatus 201 on each of platforms 401, 403 can generate a unique identifier for object 415. With reference to figure 4, platform 401 detects object 401 and reports it as:
Platform-001/Radar/001/N-A/
Where platform-001 is the reporting unit (platform 401), 'Radar' is the sensor (409) type (e.g., RADAR, electronic support measure or Data Link) used to detect the object 415, '001' is the object track number comprising platform a unique Track Number (or Data Link number if applicable), and 'N-A' is an as yet unassigned correlation ID.

Platform 403 detects object 415 and reports it, using the same format as described above, as:
Platform-002/ESM/021/N-A/
Platform 403 can instigate a correlation check with platform 401 which confirms the entity is the same as described above for example. For example, a correlation check can comprise determining whether the position of the object 415 as detected by the platforms is the same. If so, the object 415 is considered the same entity by the platforms. According to an example, platform 403, having confirmed that the object 415 is the same entity detected by it and platform 401 can generate and provide a unique Correlator ID 420 to platform 401, and the platforms can now report the track as:
Platform-001/Radar/001/TEM011COR001/
Platform-002/ESM/021/TEM011COR001/
where 'TEM011COR001' is the unique ID 420 given to the correlated entity (i.e., object 415) and used by platforms 401, 403. This now allows both platforms to report their own information about the entity but for all receiving platforms to recognise that they are both providing information about the same thing. Receiving platforms can accept, reject or fuse the information as they see fit.

The unique correlator ID defines a common ID used for display purposes and any cross-platform reference can use this ID when it is available. Should another platform detect the same object and correlate its track against either of the reports of platforms 401, 403, the platforms (401, 403) can report the new platform will use the unique correlator ID to indicate there are now three platforms reporting the same entity.

According to an example, if a local track has been correlated with other entities a correlation field of the unique correlation identifier is extensible using, e.g., comma delimitation. For example:
Platform-011/RADAR/001/PLT011-COR-Link16-A11 ,TOR001-COR-Link22-002/...
The transmitting entity is a platform with an ID of 001, the track was detected by the platforms Radar, the Track is 001 in the platforms Track Store, and platform 001, local track 001, has been correlated by platform 001 with a Link 16 reported track (A11).

According to an example, a track ID numbering sequence for first and second platforms both detecting the same land track (with that land track being on Link 16) can be as shown below. Specifically, in this example, apparatus 201 can correlate the local track with Link 16:
Platform-011/RADAR/001/PLT011-COR-Link16-A11/local track correlated with L16 A11
Platform-001/RADAR/002/PLT001-COR-Link16-A11/ local track correlated with L16 A11

This allows both platforms to report their own information about the entity but for all receiving platforms to recognise that they are both providing information on the same thing. Receiving platforms can accept, reject or fuse the information as they see fit.

The unique correlator identifier is: PLT011-COR-Link16-A11 and PLT011-COR-Link16-A11 as this ID shows that the two platforms are both reporting a track using, e.g., their local sensors but that those tracks are the same as the Link 16 Track A11. Should another platform detect the same object and correlate its track against either report of the two platforms noted above, the new platform can, e.g., use the ??????-COR-Link16-A11 ID to indicate there are now three platforms reporting the same object.

Examples in the present disclosure can be provided as methods, systems or machine-readable instructions, such as any combination of software, hardware, firmware or the like. Such machine-readable instructions may be included on a computer readable storage medium (including but not limited to disc storage, CD-ROM, optical storage, etc.) having computer readable program codes therein or thereon.

The present disclosure is described with reference to flow charts and/or block diagrams of the method, devices and systems according to examples of the present disclosure. Although the flow diagrams described above show a specific order of execution, the order of execution may differ from that which is depicted. Blocks described in relation to one flow chart may be combined with those of another flow chart. In some examples, some blocks of the flow diagrams may not be necessary and/or additional blocks may be added. It shall be understood that each flow and/or block in the flow charts and/or block diagrams, as well as combinations of the flows and/or diagrams in the flow charts and/or block diagrams can be realized by machine readable instructions.

The machine-readable instructions may, for example, be executed by a machine such as a general-purpose computer, a special purpose computer, an embedded processor or processors of other programmable data processing devices to realize the functions described in the description and diagrams. In particular, a processor or processing apparatus, such as a processor or processing apparatus of a platform, may execute the machine-readable instructions. Thus, modules of apparatus (for example, a module implementing a correlator 219, 301) may be implemented by a processor executing machine readable instructions stored in a memory, or a processor operating in accordance with instructions embedded in logic circuitry, which may be provided in an apparatus or node of a platform for example. The term 'processor' is to be interpreted broadly to include a CPU, processing unit, ASIC, logic unit, or programmable gate set etc. The methods and modules may all be performed by a single processor or divided amongst several processors.

Such machine-readable instructions may also be stored in a computer readable storage that can guide the computer or other programmable data processing devices to operate in a specific mode. For example, the instructions may be provided on a non-transitory computer readable storage medium encoded with instructions, executable by a processor.

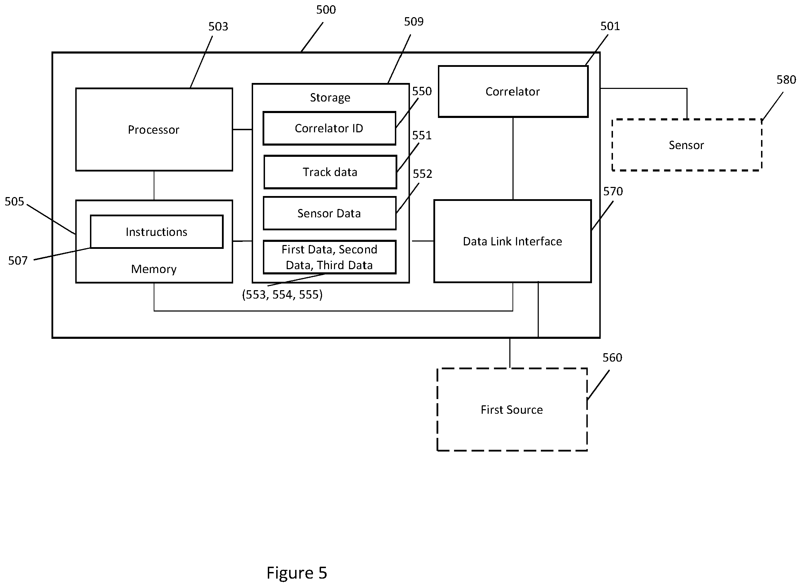

Figure 5 is a schematic representation of a node or apparatus of a platform according to an example. The node 500 comprises a correlator 501. The node 500 comprises a processor 503, and a memory 505 to store instructions 507, executable by the processor 503. The node comprises a storage 509 (or has access to such a storage, which may be remote form the node 500) that can be used to store correlator IDs 550, track data 551, sensor data 552, first data 553, second data 554, third data 555 and so on as described above with reference to figures 1 to 4 for example. The instructions 507, executable by the processor 503, can cause the correlator 501 of the node 500 to, on the basis of a first message received from a first source 560 in a tactical data link network at a data link interface 570 of the platform, the first message comprising first data 553 defining one or more parameters of an object detected by the first source, compare the first message with sensor data 552 representing the output of a sensor 580 of the platform, the sensor data 552 comprising second data 554 defining one or more parameters of an object detected by the platform, and on the basis of the comparison, generate a unique correlator identifier 550 representing a detected object, and provide the unique correlator identifier to the first source 560.

Accordingly, the node 500 can implement a method for correlating data link messages received at the platform from multiple sources in a tactical data link network.

Such machine-readable instructions may also be loaded onto a computer or other programmable data processing devices, so that the computer or other programmable data processing devices perform a series of operations to produce computer-implemented processing, thus the instructions executed on the computer or other programmable devices provide an operation for realizing functions specified by flow(s) in the flow charts and/or block(s) in the block diagrams.

Further, the teachings herein may be implemented in the form of a computer or software product, such as a non-transitory machine-readable storage medium, the computer software or product being stored in a storage medium and comprising a plurality of instructions, e.g., machine readable instructions, for making a computer device, such as a node for example, implement the methods recited in the examples of the present disclosure.

In some examples, some methods can be performed in a cloud-computing or network-based environment. Cloud-computing environments may provide various services and applications via the Internet. These cloud-based services (e.g., software as a service, platform as a service, infrastructure as a service, etc.) may be accessible through a web browser or other remote interface of the platform or a node for example. Various functions described herein may be provided through a remote desktop environment or any other cloud-based computing environment.

While various embodiments have been described and/or illustrated herein in the context of fully functional computing systems, one or more of these exemplary embodiments may be distributed as a program product in a variety of forms, regardless of the particular type of computer-readable-storage media used to actually carry out the distribution. The embodiments disclosed herein may also be implemented using software modules that perform certain tasks. These software modules may include script, batch, or other executable files that may be stored on a computer-readable storage medium or in a computing system. In some embodiments, these software modules may configure a computing system to perform one or more of the exemplary embodiments disclosed herein. In addition, one or more of the modules described herein may transform data, physical devices, and/or representations of physical devices from one form to another.

The preceding description has been provided to enable others skilled in the art to best utilize various aspects of the exemplary embodiments disclosed herein. This exemplary description is not intended to be exhaustive or to be limited to any precise form disclosed. Many modifications and variations are possible without departing from the spirit and scope of the instant disclosure. The embodiments disclosed herein should be considered in all respects illustrative and not restrictive. Reference should be made to the appended claims and their equivalents in determining the scope of the instant disclosure.

## Claims

1. Apparatus for correlating data link messages received at a platform from multiple sources in a tactical data link network, the apparatus comprising:
a data link interface to receive a first message from a first source in the tactical data link network, the first message comprising first data defining one or more parameters of an object detected by the first source; and
a correlator to:
compare the first message with sensor data representing the output of a sensor of the platform, the sensor data comprising second data defining one or more parameters of an object detected by the platform;
on the basis of the comparison, generate a unique correlator identifier representing a detected object; and
provide the unique correlator identifier to the first source.

2. The apparatus as claimed in claim 1, wherein the apparatus is configured to:
determine a set of common parameters or characteristics from the first data and the second data.

3. The apparatus as claimed in claim 2, wherein the apparatus is configured to:
provide the set of common parameters or characteristics to the first source; and
receive data from the first source representing a confirmation of whether the object detected by the first source is the same as the object detected by the platform.

4. The apparatus as claimed in any preceding claim, wherein the apparatus is configured to:
generate third data defining one or more parameters of the detected object, the third data derived from the first data and the second data.

5. The apparatus as claimed in any preceding claim, wherein the apparatus is configured to provide the unique correlator identifier to a remote platform.

6. A method for correlating data link messages received at a platform from multiple sources in a tactical data link network, the method comprising:
receiving a first message from a first source in the tactical data link network at a data link interface of the platform, the first message comprising first data defining one or more parameters of an object detected by the first source;
comparing the first message with sensor data representing the output of a sensor of the platform, the sensor data comprising second data defining one or more parameters of an object detected by the platform;
on the basis of the comparison, generating a unique correlator identifier representing a detected object; and
providing the unique correlator identifier to the first source.

7. The method as claimed in claim 6, further comprising:
generating third data defining one or more parameters or characteristics of the detected object, the third data derived from the first data and the second data.

8. The method as claimed in claim 7, further comprising identifying the third data using the unique correlator identifier.

9. The method as claimed in any of claims 6 to 8, further comprising:
storing data representing an uncorrelated detected object in a common track storage apparatus.

10. The method as claimed in any of claims 6 to 9, further comprising:
determining a set of common parameters or characteristics from the first data and the second data.

11. A platform, the platform comprising:
a data link interface to receive a first message from a first source in a tactical data link network, the first message comprising first data defining one or more parameters of an object detected by the first source; and
a correlator to:
compare the first message with sensor data representing the output of a sensor of the platform, the sensor data comprising second data defining one or more parameters of an object detected by the platform;
on the basis of the comparison, generate a unique correlator identifier representing a detected object; and
provide the unique correlator identifier to the first source.

12. The platform as claimed in claim 11, wherein the platform is configured to generate third data defining one or more parameters or characteristics of the detected object, the third data derived from the first data and the second data.

13. The platform as claimed in claim 11 or 12, the platform further comprising a common track storage apparatus to store data representing an uncorrelated detected object.

14. The platform as claimed in any of claims 11 to 13, wherein the correlator is configured to receive a correlation request from the first source.

15. The platform as claimed in any of claims 11 to 14, wherein the data link interface and correlator are part of an apparatus for the platform, which apparatus forms a node of the tactical data link network.
